# EUROPÄISCHE PATENTSCHRIFT

(11) **EP 1 640 082 B1**
(45) Veröffentlichungstag und Bekanntmachung des Hinweises auf die Patenterteilung: **25.06.2008**
(21) Anmeldenummer: 05018268.2
(22) Anmeldetag: 23.08.2005
(51) Int. Cl.: B21D 39/03, F16B 17/00

(54) **Fixiervorrichtung und -verfahren**
Fixing device and method
Dispositif et procédé de fixation

(30) Priorität: 25.08.2004 DE 102004041304
(43) Veröffentlichungstag der Anmeldung: 29.03.2006
(73) Patentinhaber: Behr GmbH & Co. KG, 70469 Stuttgart (DE)
(72) Erfinder: Bergschneider, Jörg, Dipl.-Ing., 70619 Stuttgart (DE); Kreutzer, Josef, 83362 Surberg/Hallabruck (DE)

(56) Entgegenhaltungen:
- DE-A1- 10 140 989
- DE-A1- 19 840 780
- DE-A1- 19 929 778
- "BLECHVERBINDUNGSTECHNIK IN FUENF VARIANTEN" STAHL UND EISEN, VERLAG STAHLEISEN, DUSSELDORF, DE, Bd. 123, Nr. 2, 17. Februar 2003 (2003-02-17), Seite 52, XP001145239 ISSN: 0340-4803

## Beschreibung

Die Erfindung betrifft eine Vorrichtung zum stoffschlüssigen Fixieren von aneinander anliegenden Fixierabschnitten von mindestens zwei Teilen relativ zueinander mit einem Werkzeug, gemäß dem Oberbegriff des Anspruchs 1 (siehe z.B. DE-A-198 40 780), sowie ein Verfahren zum stoffschlüssigen Fixieren gemäß Anspruchs 6.

Die Fixierabschnitte können zum Beispiel an Blechteilen oder an Kunststoffteilen ausgebildet sein. Aufeinander liegende Bleche können zum Beispiel durch Punktschweißen an einzelnen Schweißpunkten stoffschlüssig miteinander verbunden werden. Auf einer Punktschweißmaschine werden die zu verschweißenden Bleche zwischen zwei wassergekühlten Kupferelektroden zusammengedrückt. Kurzzeitig fließt ein hoher Strom von einer Elektrode durch die Bleche zur anderen Elektrode. Durch den hohen elektrischen Widerstand zwischen den Blechen entsteht die erforderliche Schweißtemperatur. Beim Reibschweißen wird Wärme, die durch Reibung entsteht, zum Schweißen genutzt. Auf einer Reibschweißmaschine wird eines der zu verbindenden Werkstücke in Drehung versetzt und dann gegen das stehende Teil gedrückt. Durch die starke Reibung erwärmen sich die Berührungsflächen sehr schnell. Sobald der Werkstoff plastisch ist, wird das drehende Teil gestoppt. Mit einer zusätzlichen Stauchkraft werden beide Teile zusammengedrückt und damit verschweißt. Beim Thermo-Fließbohren werden in dünnwandige metallische Werkstoffe Durchzüge von mehrfacher Materialstärke eingebracht. Aus der europäischen Patentschrift EP 0 150 518 B1 ist ein Fließbohrer mit einem Schaft bekannt, der ein hauptsächlich kegeliges wirksames fließbohrendes Endteils aufweist. In dem wirksamen fließbohrenden Endteil sind eine oder mehrere Vertiefungen über einen Teil der Länge des kegeligen Teils in der Nähe dessen Spitzen geformt. Die Vertiefungen weisen scharfe Kanten auf, die als Schneidkanten wirken.

Aufgabe der Erfindung ist es, eine Vorrichtung und ein Verfahren zum Fixieren von aneinander anliegenden Fixierabschnitten von mindestens zwei Teilen relativ zueinander mit einem Werkzeug, zu schaffen, die auf einfache Art und Weise kostengünstig realisierbar sind, und dennoch eine stoffschlüssige Verbindung der Fixierabschnitte ermöglichen.

Die Aufgabe wird durch eine Vorrichtung zum stoffschlüssigen Fixieren von aneinander liegenden Fixierabschnitten von mindestens zwei Teilen relativ zueinander mit einem Werkzeug mit den Merkmalen des Anspruchs 1 gelöst.

Ein bevorzugtes Ausführungsbeispiel der Vorrichtung ist dadurch gekennzeichnet, dass der Bearbeitungskopf, im Querschnitt betrachtet, an den Enden abgerundet ist. Dadurch wird die Bearbeitung der Fixierabschnitte vereinfacht.

Ein weiteres bevorzugtes Ausführungsbeispiel der Vorrichtung ist dadurch gekennzeichnet, dass der Bearbeitungskopf, in Längsrichtung betrachtet, an seinem freien Ende abgerundet ist. Dadurch wird eine unerwünschte Rissbildung an den Fixierabschnitten verhindert.

Bei der Vorrichtung gemäß der Erfindung ist das Werkzeug mit Hilfe einer Spindel drehbar gelagert ist, deren Drehzahl bis zu 30000 U/min beträgt. Die Drehzahl hängt von der Dicke und dem Material der Fixierabschnitte sowie von der Gestalt und den Abmessungen des Bearbeitungskopfes ab.

Ein weiteres bevorzugtes Ausführungsbeispiel der Vorrichtung ist dadurch gekennzeichnet, dass die Vorrichtung eine Grundplatte zur Auflage der Fixierabschnitte aufweist. Durch die Grundplatte werden die Fixierabschnitte bei der Bearbeitung in Position gehalten. Über die Grundplatte wird eine der Druckkraft des rotierenden Bearbeitungskopfes entgegengesetzte Gegenkraft auf die Fixierabschnitte aufgebracht.

Ein weiteres bevorzugtes Ausführungsbeispiel der Vorrichtung ist dadurch gekennzeichnet, dass die Grundplatte im Wirkbereich des Bearbeitungskopfes einen Aufnahmebereich für verformtes Material aufweist. Der Aufnahmebereich wird vorzugsweise von einer Durchgangsloch gebildet, dessen Längsachse mit der Drehachse des Werkzeugs zusammenfällt.

Bei einem Verfahren zum stoffschlüssigen Fixieren von aneinander anliegenden Fixierabschnitten von mindestens zwei Teilen relativ zueinander mit einer erfindungsgemäßen Vorrichtung, ist die oben angegebene Aufgabe dadurch gelöst, dass die aneinander anliegenden Fixierabschnitte mit Hilfe des Werkzeugs erwärmt und verformt werden, indem das Werkzeug in Drehung versetzt so gegen einen der Fixierabschnitte gedrückt wird, dass der Fixierabschnitt teilweise in den daran anliegenden Fixierabschnitt hinein gedrückt wird. Durch das erfindungsgemäße Verfahren wird auf einfache Art und Weise eine stoffschlüssige Verbindung zwischen den Fixierabschnitten ermöglicht.

Ein bevorzugtes Ausführungsbeispiel des Verfahrens ist dadurch gekennzeichnet, dass die Drehzahl des Werkzeugs 10000 bis 30000 U/min beträgt. Dieser Drehzahlbereich hat sich im Rahmen der vorliegenden Erfindung als besonders vorteilhaft erwiesen.

Weitere Vorteile, bevorzugte Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Es zeigen:
- Figur 1: eine schematische Darstellung eines Werkzeugs in der Vorderansicht, das bei der Vorrichtung gemäß der Erfindung verwendet wird.
- Figur 2: das Werkzeug aus Figur 1 in der Seitenansicht;
- Figur 3: das Werkzeug aus Figur 1 in der Untersicht;
- Figur 4: eine schematische Darstellung einer erfindungsgemäßen Vorrichtung mit dem Werkzeug aus den Figuren 1 bis 3 und
- Figur 5: die Ansicht eines Schnitts durch zwei aneinander anliegende Blechteile bei der Bearbeitung mit einem Werkzeug aus den Figuren 1 bis 3.

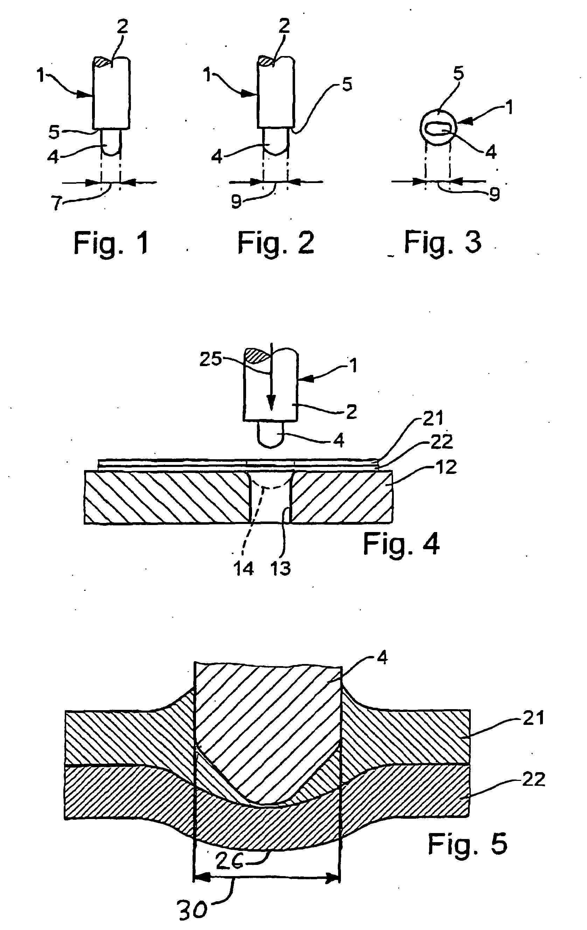

In den Figuren 1 bis 3 ist ein Werkzeug 1 einer bevorzugten Ausführungsform der erfindungsgemäßen Fixiervorrichtung in verschiedenen Ansichten dargestellt. Das Werkzeug 1 weist einen Werkzeugschaft 2 auf, der im Wesentlichen die Gestalt eines geraden Kreiszylinders hat. Mit einem (in den Figuren 1 und 2 oberen) Ende ist der Werkzeugschaft 2 mit einer (nicht dargestellten) Spindel gekoppelt, die durch einen geeigneten Antrieb angetrieben ist. Durch den Antrieb wird gewährleistet, dass der Werkzeugschaft 2 in einem Drehzahlbereich von 10000 bis 30000 U/min in Drehung versetzt werden kann. Darüber hinaus ist der Werkzeugschaft 2 mit einem weiteren Antrieb gekoppelt, durch den der Werkzeugschaft 2 in axialer Richtung hin und her bewegbar ist. Die beiden Antriebe können getrennt ausgebildet oder in einer Antriebseinheit zusammengefasst sein.

An dem anderen (in den Figuren 1 und 2 unteren) Ende des Werkzeugschafts 2 ist ein Bearbeitungskopf 4 ausgebildet, der im Wesentlichen die Gestalt einer rechteckförmigen Platte aufweist. An dem Übergang zwischen dem Werkzeugschaft 2 und dem Bearbeitungskopf 4 ist ein Absatz 5 ausgebildet, der eine Anschlagfläche bildet. Der Bearbeitungskopf 4 weist eine Dicke 7 auf, die deutlich geringer ist als der Außendurchmesser des Werkzeugschafts 2. In den Figuren 2 und 3 sieht man, dass der Bearbeitungskopf 4 eine Breite 9 aufweist, die größer als die Dicke 7 des Bearbeitungskopfes 4, aber kleiner als der Durchmesser des Werkzeugschafts 2 ist. An seinem freien Ende ist der Bearbeitungskopf 4 abgerundet. In Figur 3 sieht man, dass der Bearbeitungskopf 4, im Querschnitt betrachtet, ebenfalls an den Enden abgerundet ist.

In Figur 4 ist das untere Ende des Werkzeugs 1 aus den Figuren 1 bis 3 mit dem Bearbeitungskopf 4 dargestellt. Gegenüber des Bearbeitungskopfes 4 ist eine Grundplatte 12 im Schnitt dargestellt. Die Grundplatte 12 ist senkrecht zur Längs- und Drehachse des Werkzeugs 1 angeordnet. In der Grundplatte 12 ist eine Bohrung 13 vorgesehen, deren Längsachse mit der Drehachse des Werkzeugs 1 zusammenfällt. Der Durchmesser der Durchgangsbohrung 13 in der Grundplatte 12 ist etwa 10 bis 20 % größer wie die Breite 9 des Bearbeitungskopfes 4. Das dem Bearbeitungskopf 4 zugewandte Ende der Durchgangsbohrung 13 ist abgerundet.

Auf der dem Bearbeitungskopf 4 zugewandten Oberfläche der Grundplatte 12 liegen zwei Fixierabschnitte 21 und 22 von zwei im Wesentlichen plattenförmigen Abschnitten von verschiedenen Teilen auf. Die Unterseite des Fixierabschnitts 22 liegt auf der Oberseite der Grundplatte 12 auf. Auf der Oberseite des Fixierabschnitts 22 liegt die Unterseite des Fixierabschnitts 21 auf. Der Bearbeitungskopf 4 ist vorzugsweise aus Hartmetall gebildet. Die Fixierabschnitte 21 und 22 können aus Metall, Leichtmetall, insbesondere Aluminium, oder Kunststoff gebildet sein.

Zum Fixieren der Fixierabschnitte 21 und 22 aneinander wird das Werkzeug 1 mit dem Bearbeitungskopf 4 in Drehung versetzt und in Richtung eines Pfeils 25 nach unten bewegt. Sobald der Bearbeitungskopf 4 mit dem Fixierabschnitt 21 in Kontakt kommt, wird das Material reibungsbedingt erwärmt. Die Erwärmung führt dazu, dass das Material der Fixierabschnitte 21 und 22 im Einflussbereich des Bearbeitungskopfes 4 zu fließen beginnt, sodass die Fixierabschnitte 21 und 22 in diesem Bereich stoffschlüssig miteinander verbunden werden. Durch das Eindringen des Bearbeitungskopfes 4 in den Fixierabschnitt 21 und das Fließen des Materials wird auf der Unterseite des Fixierabschnitts 22 eine Erhebung ausgebildet, die in Figur 4 durch einen gestrichelten Kreisbogen 14 angedeutet ist. Das Einbringen des Bearbeitungskopfes 4 in die Fixierabschnitte 21, 22 wird durch die Anschlagfläche 5 begrenzt.

In Figur 5 ist das freie Ende eines Bearbeitungskopfes 4 dargestellt, der in einen Fixierabschnitt 21 fast vollständig eingedrungen ist. Durch das Eindringen des Bearbeitungskopfes 4 wurde an der Unterseite des Fixierabschnitts 22 eine Erhebung 26 ausgebildet. Im Einflussbereich der von dem Bearbeitungskopf 4 erzeugten Reibungswärme sind die Fixierabschnitte 21 und 22 stoffschlüssig miteinander verbunden. In einem Bereich 30 kann auch ein Durchfließen der Materialien stattfinden. Das Durchfließen erfolgt vorzugsweise im Lötofen.

## Patentansprüche

1. Vorrichtung zum stoffschlüssigen Fixieren von aneinander anliegenden Fixierabschnitten (21,22) von mindestens zwei Teilen relativ zueinander mit einem Werkzeug (1), wobei das Werkzeug (1) drehbar gelagert ist und einen Bearbeitungskopf (4) aufweist, der einen länglichen Querschnitt hat, **dadurch gekennzeichnet, dass** der Bearbeitungskopf (4) eine Breite (9) aufweist, die größer als eine Dicke (7) des Bearbeitungskopfes (4) ist und das Werkzeug (1) mit Hilfe einer Spindel drehbar gelagert ist, deren Drehzahl bis zu 30000 U/min beträgt.

2. Vorrichtung nach Anspruch 1, **dadurch gekennzeichnet, dass** der Bearbeitungskopf (4), im Querschnitt betrachtet, an den Enden abgerundet ist.

3. Vorrichtung nach einem der vorhergehenden Ansprüche, **dadurch gekennzeichnet, dass** der Bearbeitungskopf (4), in Längsrichtung betrachtet, an seinem freien Ende abgerundet ist.

4. Vorrichtung nach einem der vorhergehenden Ansprüche, **dadurch gekennzeichnet, dass** die Vorrichtung eine Grundplatte (12) zur Auflage der Fixierabschnitte (21,22) aufweist.

5. Vorrichtung nach Anspruch 4, **dadurch gekennzeichnet, dass** die Grundplatte (12) im Werkbereich des Bearbeitungskopfes (4) einen Aufnahmebereich (13) für verformtes Material aufweist.

6. Verfahren zum stoffschlüssigen Fixieren von aneinander anliegenden Fixierabschnitten (21,22) von mindestens zwei Teilen relativ zueinander mit einer Vorrichtung nach einem der vorhergehenden Ansprüche, bei welchem die aneinander anliegenden Fixierabschnitte (21,22) mit Hilfe des Werkzeugs (1) erwärmt und verformt werden, indem das Werkzeug (1) in Drehung versetzt und so gegen einen der Fixierabschnitte (21) gedrückt wird, dass der Fixierabschnitt (21) teilweise in den daran anliegenden Fixierabschnitt (22) hinein gedrückt wird.

7. Verfahren nach Anspruch 6, **dadurch gekennzeichnet, dass** die Drehzahl des Werkzeugs 10000 bis 30000 U/min beträgt.

## Claims

1. Device for fixing by adhesive force adjacent fixing sections (21, 22) of at least two components to one another by means of a tool (1), wherein the tool (1) is rotatably mounted and comprises a machining head (4) with an oblong cross-section, **characterised in that** the machining head (4) has a width (9) which is greater than a thickness (7) of the machining head (4), and **in that** the tool (1) is rotatably mounted by means of a spindle with a speed up to 30000 rpm.

2. Device according to claim 1, **characterised in that** the machining head (4), if viewed in cross-section, is rounded at the ends.

3. Device according to any of the preceding claims, **characterised in that** the machining head (4), if viewed in the longitudinal direction, is rounded at its free end.

4. Device according to any of the preceding claims, **characterised in that** the device comprises a base plate (12) for supporting the fixing sections (21, 22).

5. Device according to claim 4, **characterised in that** the base plate (12) is provided with a location (13) for deformed material in the work region of the machining head (4).

6. Method for fixing by adhesive force adjacent fixing sections (21, 22) of at least two components to one another by means of a device according to any of the preceding claims, wherein the adjacent fixing sections (21, 22) are heated and deformed by means of the tool (1) by causing the tool (1) to rotate and pressing it against one of the fixing sections (21) such that the fixing section (21) is partially pushed into the adjacent fixing section (22).

7. Method according to claim 6, **characterised in that** the tool has a speed of 10000 to 30000 rpm.

## Revendications

1. Dispositif de fixation, par continuité de matière, de parties de fixation (21, 22) placées l'une contre l'autre, d'au moins deux pièces l'une par rapport à l'autre, avec un outil (1), l'outil (1) étant monté en rotation et présentant une tête d'usinage (4) qui a une section allongée,
**caractérisé en ce que** la tête d'usinage (4) présente une largeur (9) qui est supérieure à une épaisseur (7) de la tête d'usinage (4), et l'outil (1) est monté en rotation à l'aide d'une broche dont la vitesse de rotation va jusqu'à 30.000 tours/minute.

2. Dispositif selon la revendication 1, **caractérisé en ce que** la tête d'usinage (4), vue en section, est arrondie au niveau des extrémités.

3. Dispositif selon l'une ou l'autre des revendications précédentes, **caractérisé en ce que** la tête d'usinage (4), vue dans le sens longitudinal, est arrondie au niveau de son extrémité libre.

4. Dispositif selon l'une quelconque des revendications précédentes, **caractérisé en ce que** le dispositif présente une plaque de base (12) servant d'appui aux parties de fixation (21, 22).

5. Dispositif selon la revendication 4, **caractérisé en ce que** la plaque de base (12) présente, dans la zone de travail de la tête d'usinage (4), une zone réceptrice (13) pour de la matière déformée.

6. Procédé de fixation, par continuité de matière, de parties de fixation (21, 22) placées l'une contre l'autre, d'au moins deux pièces l'une par rapport à l'autre, avec un dispositif selon l'une quelconque des revendications précédentes, dans lequel les parties de fixation (21, 22) placées l'une contre l'autre sont chauffées et déformées à l'aide de l'outil (1), tandis que l'outil (1) est déplacé en rotation et pressé contre l'une des parties de fixation (21), de manière telle que la partie de fixation (21) soit partiellement enfoncée dans la partie de fixation (22) contiguë à celle-ci.

7. Procédé selon la revendication 6, **caractérisé en ce que** la vitesse de rotation de l'outil est comprise entre 10.000 tours/minute et 30.000 tours/minute.
